Europäisches Patentamt

European Patent Office

Office européen des brevets

(19)

(11) Publication number: **0 124 242**
**A2**

(12) # EUROPEAN PATENT APPLICATION

(21) Application number: **84301969.6**

(22) Date of filing: **23.03.84**

(51) Int. Cl.³: **F 16 K 37/00**

(30) Priority: **31.03.83 GB 8308976**

(43) Date of publication of application: **07.11.84**
**Bulletin 84/45**

(84) Designated Contracting States: **DE FR GB**

(71) Applicant: **MOOG CONTROLS LIMITED, Windsor House Bayshill Road, Cheltenham, GL50 3AT (GB)**

(72) Inventor: **Britton, John David Unit 2, Castle Industrial Estate Castle Street, Melbourne Derby DE7 1DY (GB)**

(74) Representative: **Hill, Cecilia Ann et al, Abel & Imray Northumberland House 303-306 High Holborn, London, WC1V 7LH (GB)**

(54) **Position transducer.**

(57) A servovalve has a sensor for sensing the movement and indicating the position of the valve spool (1). The sensor comprises a ferrite core (5) mounted upon an extension (4) of the spool (1), and a pick-up coil (6) connected into the circuit of a Colpitts oscillator whose output drives, via a voltage limiter, a phase lock loop integrated circuit (IC2). The output of the circuit (IC2) is connected to a phase comparator (IC3) to produce a control signal whose amplitude represents the frequency of oscillation of the oscillator.

Position Transducer

This invention relates to position transducers and has particular reference to transducers for determining the position of a spool in a valve, especially a servovalve..

In a known form of servovalve, the spool is moved by an hydraulic amplifier controlled by the movement of the armature of a torque motor and changes in the position of the spool are sensed by a cantilever mounted spring arranged to apply a restoring force to the armature. In that way the spool is set to a position determined by the current flow through the motor. Whilst such a mechanical feedback arrangement is satisfactory, the spring must be accurately positioned and mounted and, even then, the resolution hysteresis, dynamic response and other performance parameters of the servovalve are limited.

In another known form of servovalve, changes in the position of the spool are sensed instead by an electrical LVDT position transducer consisting of two or three pick-up coils, a member of magnetic material and a pressure isolation tube. The member of magnetic material is mounted, for movement with the spool, inside the pressure isolation tube around which the pick-up coils are arranged. In that way, by use of appropriate conditioning electronics, an electrical feedback signal can be applied to the torque motor for more accurate positioning of the spool.

It is an object of the present invention to improve further the arrangement for positioning the spool of a servovalve.

The present invention provides a valve having a spool member and a motor, the movement of said spool member being responsive to electrical signals supplied to said motor, and means for sensing the movement of said spool member, said means including a single pick-up coil, a member of magnetic material mounted for movement with said spool member, and means for sensing changes in the inductance of the coil.

Advantageously, the coil and the member of magnetic material are both arranged to be located in the fluid that is to be controlled by the spool member.

The member of magnetic material may be mounted upon the spool member or on an extension thereof.

The measuring means may include an oscillator whose frequency of oscillation is determined by the inductance of the pick-up coil.

The oscillator may be a Colpitts oscillator.

The invention further provides a servovalve system including a servovalve as defined above together with frequency-to-voltage conversion means responsive to the oscillation frequency of said oscillator, and summing amplifier means responsive to the output of such conversion means and to a servovalve command signal, wherein the electrical signal supplied to said motor is derived at least in part from the output of said summing amplifier means so that movement of said servovalve spool member is responsive to the servovalve command signal.

By way of example only, servovalves embodying the invention will now be described in greater detail with reference to the accompanying drawings of which:-

Fig. 1    is a cross-section of part of a first servovalve,

Fig. 2    is a circuit diagram,

Fig. 3    is a cross-section showing the servovalve of Fig. 1 in more detail, and,

Fig. 4    is a cross-section of part of a second servovalve.

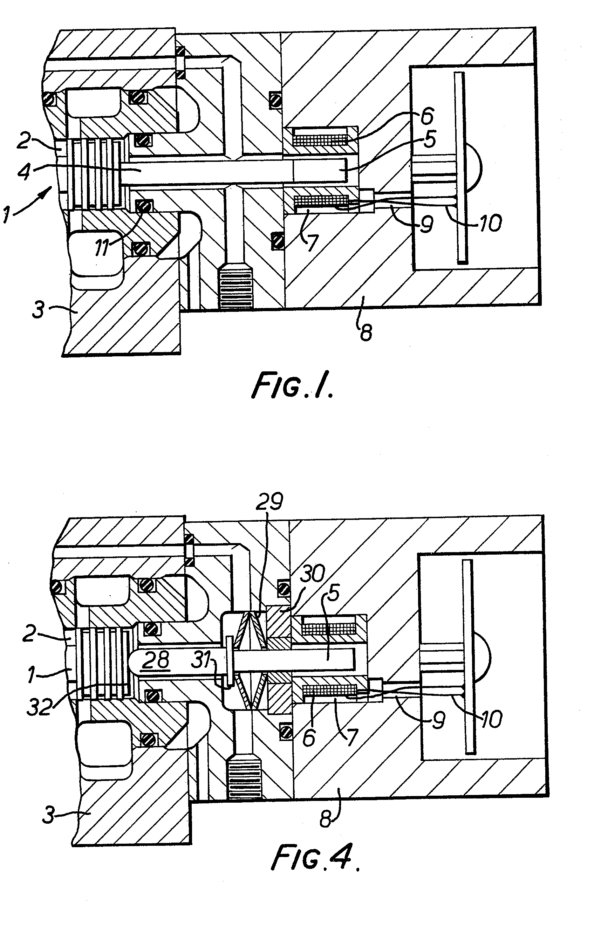

Referring first to Fig. 1, a servovalve spool 1 is mounted for longitudinal movement in a cylindrical bore 2 in a valve body 3. Part only of the spool 1 and of the valve body 3 is shown: the remainder, and the control of movement of the spool, will be described below.

An extension 4 of the spool 1 carries a small ferrite core 5 which, in the null position shown of the spool 1 is located centrally, as illustrated, with respect to a single pick-up coil 6. The coil 6 is of relatively heavy gauge wire layer wound on a former and positioned in a spool end chamber 7 in an end cap 8 secured to an end wall of the body 3. The coil 6 and core 5 are thus both located in the same working fluid as the spool 1. A sealed bore 9 extends from the chamber 7 through the end cap and carries the output leads 10 from the coil 6. A seal shown at 11 prevents leakage of hydraulic fluid from the spool bore 2.

In use, movement of the spool 1 produces movement of the ferrite core 5 relatively to the pick-up coil 6 so producing a change in the inductance of the latter which is measured and used to indicate the extent of movement of the spool 1. A control signal derived from the changes of inductance constitutes a feedback signal used as will be described below to assist in the positioning of the spool 1.

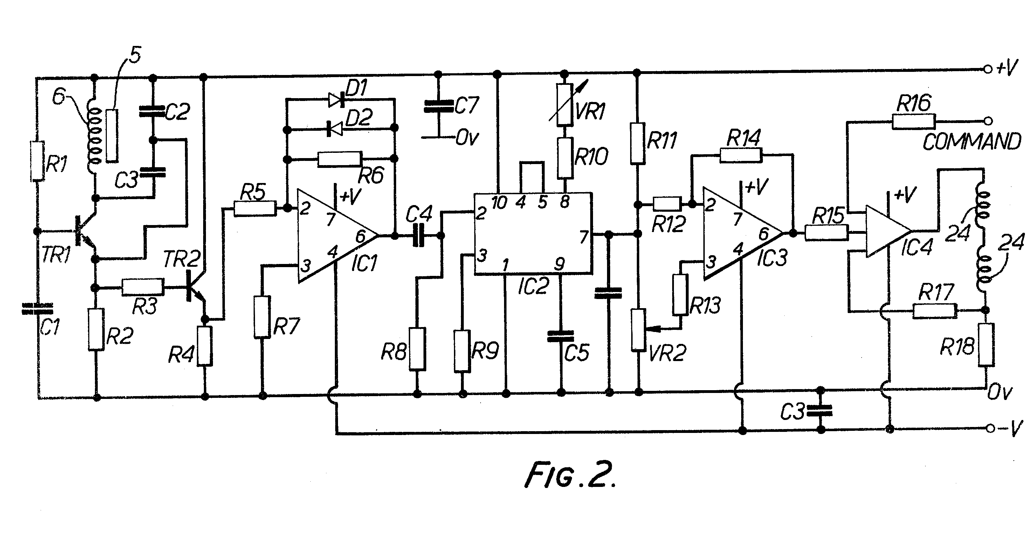

Fig. 2 is a diagram of a circuit for determining changes in inductance of coil 6 caused by movement of core 5 and deriving a control signal therefrom.

Coil 6 in conjunction with capacitors C2 and C3 form the tuning circuit of a Colpitts oscillator including transistor TR1. The parameters of the oscillator are arranged so that it has a known frequency with the spool 1 in the null position, the core 5 then being located centrally of the pick-up coil 6. Spool movements either to the left or to the right as viewed in Fig. 1 produce changes in the frequency of oscillation of the oscillator.

The output of the oscillator buffered by amplifying stage TR2 operating as an emitter follower is coupled via resistor R5 to one of the inputs of integrated circuit IC1 operating as a voltage limiter and whose output via capacitor C4 drives a phase lock loop integrated circuit IC2. Diodes D1 and D2 limit the maximum input voltage swing applied to IC2.

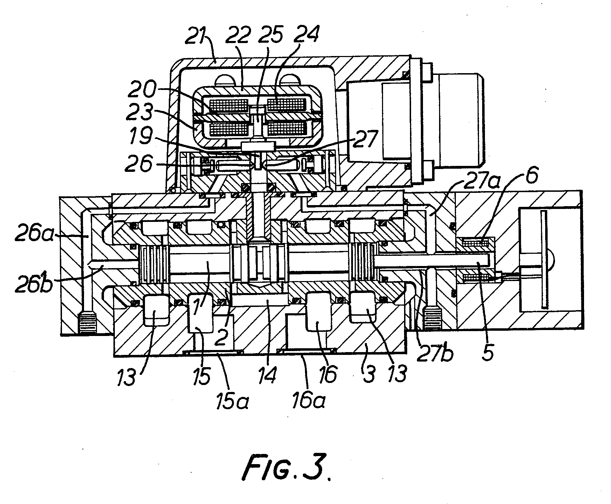

The output of IC2 is applied via resistor R12 to phase comparator integrated circuit IC3 whose output signal changes in magnitude in correspondence with changes in frequency of the Colpitts oscillator. The output signal of circuit IC3 thus provides an indication of spool position and, in the circuit shown in Fig. 2, is used as a feedback signal in the control of the spool position as will be described below with reference to Fig. 3.

Using a cylindrical ferrite core 5 of length 8 mm and diameter 4.5 mm in conjunction with a pick-up coil 6 consisting of two layers of 28 swg wire layer wound on a non-magnetic former 7 mm long and 6.5 mm outside diameter, and a Colpitts oscillator configured to oscillate at a frequency of 750 kHz, with the spool 1 in its null position and coil 6 located centrally and coaxially with respect to core 5, changes in longitudinal position of the spool of 1.25 mm produce a change in the frequency of oscillation of 75 kHz. In order to minimise the effects of stray capacitance on the oscillator tuning, it is desirable that the inductance of the coil 6 be minimised. This ensures that the capacitive effects of spool movement are minimal and also imparts an intrinsic safety feature allowing the servovalve to be used in explosive atmospheres. The layer winding of the coil 6 also assists in ensuring a good linear relationship between spool movement and oscillator frequency.

IC1 may be of Type 3140 and IC2 of Type SE565. IC1 provides an output within the range +/- 500 mV into IC2. The frequency of the voltage controlled oscillator of IC2 is determined by capacitor C5 and potentiometer VR1 in conjunction with resistor R10. The capture range of the loop is +/- 50% of the nominal centre frequency.

IC3 of Type 3140 employing a gain of 10 gives a sensitivity for the entire system of 10 mV per 0.025 mm of spool movement.

The system as thus far described provides a very sensitive and accurate indication of spool movement. The system has the further advantage that the absence of a permanent magnetic path ensures that there is no tendency for any ferrous debris that may be present in the hydraulic fluid to accumulate in the vicinity of the coil and core.

A servovalve incorporating the core/coil arrangement of Fig. 1 is shown in section in Fig. 3. The whole length of the spool 1 can now be seen, mounted for longitudinal movement in the bore 2 and also shown are the various valve ports, namely two pressurised fluid supply ports 13 with respective output control ports 15, 16 and a common return port 14. The control ports 15, 16 connect with respective control outputs 15a, 16a and thence with a mechanism (for example a double acting piston) which is to be controlled by the valve. The spool controls the flow of hydraulic fluid from one or other of the supply ports 13 to the associated control port 15 or 16 (together with the connection of the other control port to the return port 14).

The spool is actuated by differential fluid

0124242

pressure on its end faces, the differential being controlled by a flapper 19 attached to the armature 20 of a torque motor located in a housing 21 attached to the body 3. The torque motor comprises upper and lower polepieces 22, 23 with energising coils shown at 24. The armature 20 is supported upon a flexure tube 25 from which the flapper 19 extends to act in conjunction with nozzle members 26, 27. Each nozzle member is located in a respective passageway 26a, 27a connecting a pressurised fluid inlet orifice 26b, 27b to the fluid return 14, each passageway 26a, 27a also having an outlet 26b, 27b to a respective end of the valve spool 1. Operation of the torque motor causes movement of the flapper to close one of the nozzles 26, 27 and thereby to apply a differential pressure across the spool 1 via the passageway outlets 26b, 27b.

The system operates on a conventional closed-loop control: the actual position of the spool 1 is detected through the core and coil arrangement 5, 6 and is compared with the desired position, and the position of the spool is then adjusted in dependence on the comparison through operation of the torque motor. More particularly, referring to Fig. 2, the output from IC3 represents the actual spool position as detected through the core and coil arrangement 5, 6 and is compared in integrated circuit IC4 with a command signal representing the desired spool position. The resulting error signal amplified as necessary determines the current fed to the energising coil 24 of the torque motor which in turn adjusts the position of the spool 1.

The accurate indication of spool movement that can be provided by the core and coil arrangement 5, 6 means that the servovalve can be both accurate and precise in operation.

Fig. 4 is a cross-section corresponding with

0124242

that of Fig. 1 of a second form of servovalve embodying the invention. In Fig. 4 parts corresponding with parts in Fig. 1 have the same references.

In the embodiment shown in Fig. 4, the ferrite core 5 is carried at one end of a short rod-like support 28. The support 28 is loaded by a spring 29 located between a seat 30 on the end cap 8 and a disc 31 secured to the support 28. The spring 29 holds the support 28 in contact with the end face 32 of the spool 1 so that the support 28 moves with the spool 1. The loading by the spring 29 is sufficient merely to ensure that the support 28 is at all times in contact with the spool 1.

It will be appreciated that the coil/core arrangement 5, 6 described above can be used to indicate the movement of spools of other forms of valve than the servovalve described.

For example, in a direct drive valve, the spool is driven directly by a linear force motor. By incorporating a core/coil movement detector such as is described above, the position of the spool can be indicated at any given point in time, or the output of the detector may be used to close a control loop and thus form an electrical feedback servovalve for driving the spool.

An advantage of the detector arrangement described above is that the device consists of only one coil of relatively heavy gauge wire running immersed in the working fluid. The arrangement obviates the need for pressure isolation tubes used in previous position detectors and reduces the number of soldered joints required and thereforer is of lower cost and generally more reliable. Furthermore, the device has low electrical inductance, making it ideally suitable for applications requiring intrinsically safe apparatus.

8

1. A valve having a spool member and a motor, the movement of said spool member being responsive to electrical signals supplied to said motor, and means for sensing the movement of said spool member, said means including a single pick-up coil, a member of magnetic material mounted for movement with said spool member, and means for sensing changes in the inductance of the coil.

2. A valve as claimed in claim 1, in which the coil and the member of magnetic material are both arranged to be located in the fluid that is to be controlled by the spool member.

3. A valve as claimed in claim 1 or claim 2, in which the member of magnetic material is mounted upon the spool member or on an extension thereof.

4. A valve as claimed in claim 1 or 2, in which the member of magnetic material is carried by a support separate from and arranged for movement with the spool member.

5. A valve as claimed in any one of the preceding claims, in which the member of magnetic material is of tubular form, the pick-up coil being mounted coaxially with respect to the member of magnetic material.

6. A valve as claimed in any one of the preceding claims, in which the sensing means includes an oscillator whose frequency of oscillation is determined by the inductance of the pick-up coil.

7. A valve as claimed in claim 6, in which the oscillator is a Colpitts oscillator.

8. A valve as claimed in claim 6 or claim 7, in which the inductance of the pick-up coil is minimal.

9. A servovalve system including a valve as claimed in any one of claims 6 to 8, frequency-to-voltage conversion means responsive to the oscillation frequency of said oscillator, and summing amplifier means responsive to the output of such conversion means and to a valve command signal, wherein the electrical signal supplied to said motor is derived at least in part from the output of said summing amplifier means so that movement of said valve spool member is responsive to the valve command signal.

*FIG.I.*

*FIG.4.*

0124242

FIG. 2.

FIG.3.